(19) Europäisches Patentamt
European Patent Office
Office européen des brevets

(11) **EP 2 160 416 B1**

(12) **FASCICULE DE BREVET EUROPEEN**

(45) Date de publication et mention
de la délivrance du brevet:
**01.05.2013 Bulletin 2013/18**

(21) Numéro de dépôt: **08760909.5**

(22) Date de dépôt: **12.06.2008**

(51) Int Cl.:
***C08F 2/38*** (2006.01)

(86) Numéro de dépôt international:
**PCT/EP2008/057365**

(87) Numéro de publication internationale:
**WO 2008/155282 (24.12.2008 Gazette 2008/52)**

(54) **MICROGEL POLYMERIQUE COMPRENANT DES UNITES CATIONIQUES**

POLYMERMIKROGEL MIT KATIONISCHEN EINHEITEN

POLYMERIC MICROGEL COMPRISING CATIONIC UNITS

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **14.06.2007 FR 0704240**

(43) Date de publication de la demande:
**10.03.2010 Bulletin 2010/10**

(73) Titulaire: **Rhodia Opérations
93306 Aubervilliers (FR)**

(72) Inventeurs:
• **GONZALEZ, Iñigo
F-75018 Paris (FR)**
• **WILSON, David James
F-75019 Paris (FR)**
• **DESTARAC, Mathias
F-75005 Paris (FR)**
• **KARAGIANNI, Katerina
F-75013 Paris (FR)**

(74) Mandataire: **Jacobson, Claude et al
Cabinet Lavoix
2, Place d'Estienne d'Orves
75441 Paris Cedex 09 (FR)**

(56) Documents cités:
**WO-A-01/03658        WO-A-2004/014535**

**Description**

La présente invention a pour objet de nouveaux microgels polymériques, et un procédé adapté pour leur préparation. Les nouveaux microgels comprennent des unités cationiques.

Des microgels ayant une architecture simple (microgels dits parfois de première génération) ou une architecture d'étoile présentant des branches macromoléculaires en périphérie (microgels dits parfois de deuxième génération ou copolymère étoile ou microgel étoile) ont été décrits. Ces microgels comprennent un coeur polymérique réticulé comprenant des unités dérivant de monomères monofonctionnels, et des unités dérivant de monomères polyfonctionnels. Dans le cas des microgels ayant une architecture d'étoile, les microgels présentent des branches macromoléculaires en périphérie du coeur. Le document WO2004014535 décrit par exemple des microgels dont le coeur présente des unités neutres hydrophiles dérivant d'acrylamide, ou des unités neutres hydrophobes dérivant d'acrylate de butyle. Le document WO2006067325 décrit par exemple des microgels à architecture d'étoile dont le coeur présente des unités neutres hydrophiles dérivant d'acrylamide, ou des unités potentiellement anioniques dérivant d'acide acrylique. Le document WO2005116097 décrit un procédé de préparation de microgels à architecture d'étoile dont le coeur présente des unités neutres hydrophiles dérivant d'acrylamide, ou des unités potentiellement anioniques dérivant d'acide acrylique. Les documents WO2000002939 et WO2001077198 décrivent des procédés de préparation de microgels à architecture d'étoile comprenant des chaines macromoléculaires en périphérie d'un coeur. Le document WO0056792 décrit des microgels comprenant des unités neutres hydrophiles dérivant d'acrylamide. Le document WO9958588 décrit un procédé de préparation de microgels à architecture d'étoile comprenant des chaines macromoléculaires en périphérie d'un coeur. Le document WO9831739 décrit des microgels comprenant des unités neutres hydrophobes comme le tertbutyle styrène (TBS). Les documents WO2004048428 et WO2004048429 décrivent la préparation de microgels à partir d'unités monofonctionnelles neutres.

Il existe un besoin constant de l'industrie pour de nouveaux polymères pouvant apporter de nouvelles propriétés ou de nouvelles fonctionnalités à des applications où ils sont utilisés, ou pouvant moduler des propriétés ou fonctionnalités à des applications où ils sont utilisés.

L'invention répond à ce besoin en proposant un microgel polymérique réticulé chimiquement présentant un coeur C comprenant:

- des unités réticulantes R dérivant d'un monomère R réticulant comprenant au moins deux groupes polymérisables, et
- des unités de coeur C dérivant d'au moins un monomère C comprenant un seul groupe polymérisable, comprenant :
- des unités cationiques $C_{cat}$ dérivant d'au moins un monomère $C_{cat}$ cationique tel que décrit dans la revendication 1, et
- éventuellement des unités neutres $C_N$, hydrophiles ou hydrophobes dérivant d'au moins un monomère $C_N$ neutre hydrophile ou hydrophobe,

le microgel étant différent d'un copolymère étoile comprenant des branches macromoléculaires en périphérie du coeur.

L'invention concerne également un procédé de préparation des microgels.

<u>Définitions</u>

Dans la présente demande, on entend par <u>microgel</u> un composé macromoléculaire, copolymère, présentant un coeur. Le terme microgel désigne aussi un <u>nanogel</u> si les tailles rendent cette dénomination plus appropriée. Un <u>coeur</u> est une macromolécule réticulée chimiquement comprenant des unités dérivant d'un monomère comprenant une seule fonction polymérisable et des unités comprenant au moins deux fonctions polymérisables. Le microgel de l'invention est différent d'un microgel comprenant en périphérie du coeur des branches macromoléculaires, liées au coeur. Le terme coeur est utilisé par opposition à des branches macromoléculaires en périphérie. Des microgels présentant un coeur et pas de branches en périphéries sont des architectures macromoléculaires connues de l'homme du métier. On utilise parfois aussi le mot "copolymère étoile" pour désigner des microgels comprenant les branches macromoléculaires en périphérie du coeur.

Dans la présente demande, on note <u>"Coeur C" un microgel</u> comprenant un coeur polymérique réticulé chimiquement, mais ne comprenant pas de branches macromoléculaires en périphérie du coeur. Il s'agit de macromolécules microscopiques avec des réticulations intra chaines. De tels coeurs C peuvent être obtenus par copolymérisation d'un monomère C présentant un seul groupe polymérisable et d'un monomère réticulant R présentent au moins deux groupes polymérisables (monomère réticulant), en absence de tensioactif, ou en présence d'une faible quantité de tensioactif (par exemple moins de 10% en poids, de préférence moins de 5% en poids, voire même moins de 1% en poids ou pas du tout). Ils se distinguent notamment en cela des "nanolatex", polymères obtenus par polymérisation en émulsion en présence de fortes quantités de tensioactifs à l'équilibre thermodynamique ou proche.

Dans la présente demande, on désigne par <u>unité dérivant d'un monomère</u> une unité qui peut être obtenue directement à partir dudit monomère par polymérisation. Ainsi, par exemple, une unité dérivant d'un ester d'acide acrylique ou méthacrylique ne couvre pas une unité de formule -CH$_2$-CH(COOH)-, -CH$_2$-C(CH$_3$)(COOH)-, -CH$_2$-CH (OH)-, respectivement, obtenue par exemple en polymérisant un ester d'acide acrylique ou méthacrylique, ou de l'acétate de vinyle, respectivement, puis en hydrolysant. Une unité dérivant d'acide acrylique ou méthacrylique couvre par exemple une unité obtenue en polymérisant un monomère (par exemple un ester d'acide acrylique ou méthacrylique), puis en faisant réagir (par exemple par hydrolyse) le polymère obtenu de manière à obtenir des unités de formule -CH$_2$-CH (COOH)-, ou - CH$_2$-C(CH$_3$)(COOH)-. Une unité dérivant d'un alcool vinylique couvre par exemple une unité obtenue en polymérisant un monomère (par exemple un ester vinylique), puis en faisant réagir (par exemple par hydrolyse) le polymère obtenu de manière à obtenir des unités de formule -CH$_2$-CH(OH)-.

On définit les symboles suivants:

- $N_R$ est le nombre de fonctions polymérisables (typiquement de fonctions éthylèniquement insaturées) dans un monomère réticulant R
- $n_R$ est le nombre de moles de monomère(s) réticulant(s) R,
- $n_T$ est le nombre de moles total de monomères (monomère(s) C + monomère(s) R),
- $N_{Control}$ est le nombre de groupes de control dans un agent de control si un tel agent est utilisé lors de la polymérisation
- $n_{Control}$ est le nombre de moles d'agent de control si un tel agent utilisé lors de la polymérisation
-

$$r = (N_{Control} * n_{Control} / n_T) / (N_R/2) * (n_R / n_T) = 2 * (N_{Control} * n_{Control}) / (N_R * n_R)$$

Dans la présente demande, le terme «hydrophobe», pour un monomère, est utilisé dans son sens usuel de «qui n'a pas d'affinité pour l'eau»; cela signifie que le monomère peut former une solution macroscopique diphasique dans de l'eau distillée à 25°C, à une concentration supérieure ou égale à 1% en poids, ou qu'il a été catégorisé comme hydrophobe dans la présente demande.

Dans la présente demande, le terme «hydrophile», pour un monomère, est également utilisé dans son sens usuel de «qui a de l'affinité pour l'eau», c'est-à-dire n'est pas susceptible de former une solution macroscopique diphasique dans de l'eau distillée à 25°C à une concentration supérieure ou égale à 1% en poids, ou qu'il a été catégorisé comme hydrophile dans la présente demande.

Par unités cationiques ou potentiellement cationiques, on entend des unités qui comprennent un groupe cationique ou potentiellement cationique. Les unités ou groupes cationiques sont des unités ou groupes qui présentent au moins une charge positive (généralement associée à un ou plusieurs anions comme l'ion chlorure, l'ion bromure, un groupe sulfate, un groupe méthylsulfate), quel que soit le pH du milieu dans lequel le microgel est introduit. Les unités ou groupes potentiellement cationiques sont des unités ou groupes qui peuvent être neutres ou présenter au moins une charge positive selon le pH du milieu le microgel est introduit. Dans ce cas on parlera d'unités potentiellement cationiques sous forme neutre ou sous forme cationique. Par extension on peut parler de monomères cationiques ou potentiellement cationiques.

Par unités anioniques ou potentiellement anioniques, on entend des unités qui comprennent un groupe anionique ou potentiellement anionique. Les unités ou groupes anioniques sont des unités ou groupes qui présentent au moins une charge négative (généralement associée à un ou plusieurs cations comme des cations de composés alcalins ou alcalino-terreux, par exemple le sodium, ou à un ou plusieurs composés cationiques comme l'ammonium), quel que soit le pH du milieu où est présent le microgel. Les unités ou groupes potentiellement anioniques sont des unités ou groupes qui peuvent être neutres ou présenter au moins une charge négative selon le pH du milieu où est présent le microgel. Dans ce cas on parlera de d'unités potentiellement anioniques sous forme neutre ou sous forme anionique. Par extension on peut parler de monomères anioniques ou potentiellement anioniques.

Par unités neutres, on entend des unités qui ne présentent pas de charge, quel que soit le pH du milieu où est présent le microgel.

Microgels de l'invention

Le microgel de l'invention (Coeur C) comprend:

- des unités réticulantes R dérivant d'un monomère R réticulant comprenant au moins deux groupes polymérisables, et
- des unités de coeur C dérivant d'au moins un monomère C comprenant un seul groupe polymérisable, comprenant
- des unités cationiques $C_{cat}$ dérivant d'au moins un monomère $C_{cat}$ cationique, et
- éventuellement des unités neutres $C_N$, hydrophiles ou hydrophobes dérivant d'au moins un monomère $C_N$ neutre hydrophile ou hydrophobe.

Les groupes polymérisables des monomères C et R sont de préférence des groupes éthylèniquement insaturés, de préférence alpha-éthylèniquement insaturés. Les monomères C sont ainsi de préférence des monomères mono éthylèniquement insaturés, de préférence mono-alpha-éthylèniquement insaturés. Les monomères R sont ainsi de préférence des monomères multiéthylèniquement insaturés, de préférence di- ou tri-éthylèniquement insaturés, par exemple di-alpha-éthylèniquement insaturés ou tri-alpha-éthylèniquement insaturés.

Il n'est pas exclu que les unités C et les monomères C comprennent plusieurs unités différentes ou dérivent des plusieurs monomères différents. Il n'est pas exclu que les unités $C_{cat}$ et les monomères $C_{cat}$ comprennent plusieurs unités différentes ou dérivent des plusieurs monomères différents. On note que les unités C ou les monomères C peuvent comprendre à la fois des unités $C_{cat}$ et des unités $C_N$ ou peuvent dériver à la fois de monomères $C_{cat}$ et $C_N$. Les unités C et les monomères C peuvent comprendre en plus, optionnellement, d'autres types d'unités, ou peuvent dériver, optionnellement, d'autres monomères. Les unités C peuvent notamment comprendre en plus des unités zwitterioniques $C_z$, dérivant de monomères zwitterioniques $C_z$, et/ou des unités anioniques ou potentiellement anioniques $C_A$ dérivant de monomères anioniques ou potentiellement anioniques $C_A$.

Le microgel est susceptible d'être obtenu par un procédé mettant en oeuvre un procédé de polymérisation radicalaire contrôlée, comme exposé plus bas.

Le microgel est différent d'un copolymère étoile comprenant un coeur C et en périphérie du coeur des branches macromoléculaires. Le microgel peut présenter un groupe de control ou un résidu d'un tel groupe à des extrémités des molécules polymériq ues.

Le microgel peut être présenté notamment sous forme de poudre, sous forme de dispersion dans un liquide ou sous forme de solution dans un solvant. Ces deux dernières formes peuvent être assimilées à des formes en milieux dispersés. Le microgel peut être par exemple compris dans un milieu aqueux (comprenant de l'eau) par exemple en milieu aqueux ou autre. La forme dépend généralement des exigences liées à l'utilisation du microgel. Elle peut être aussi liée au procédé de préparation du microgel.

Le microgel peut notamment être constitué de macromolécules réticulées de taille moyenne allant de 5 nm à 10 $\mu$m, par exemple de 5 nm à 100 nm (on peut parler de nanogels) ou de 100 nm à 1 $\mu$m (par exemple de 100 nm à 200 nm, ou de 200 nm à 300 nm ou de 300 nm à 400 nm, ou de 400 nm à 500 nm ou de 500 nm à 600 nm, ou de 600 nm à 700 nm, ou de 700 nm à 800 nm, ou de 800 nm à 900 nm, ou de 900 nm à 1 $\mu$m), ou de 1 $\mu$m à 5 ou 10 $\mu$m. Les tailles peuvent être déterminées de manière classique par des techniques de diffusion de la lumière ou de diffraction des rayons-X, dans des milieux dispersés.

Le microgel, et son procédé de préparation, est de préférence tel qu'il ne forme pas de réseau macromoléculaire macroscopique réticulé (réticulation inter chaines). Si il est en milieu dispersé, par exemple en milieu aqueux, le microgel présente avantageusement une viscosité (Brookfield) inférieure à 20000 cP, de préférence inférieure à 10000 cP, à 25°C, à un cisaillement de 100 s$^{-1}$ ou inférieur, ou de préférence à un cisaillement de 10 s$^{-1}$.

On a notamment remarqué que des microgels présentant des unités cationiques $C_{cat}$ pouvaient présenter des tailles particulièrement petites, et que des procédés mettant en oeuvre des monomères $C_{cat}$ pouvaient permettre de réduire sensiblement la taille des microgels. L'invention peut permettre de réduire les tailles de manière simple.

Le microgel (Coeur C), comprend des unités polymérisées. Toutes les unités mentionnées ci-dessous sont envisageables, ainsi que leurs combinaisons. Certaines combinaisons sont l'objet de modes de réalisations particuliers.

Les monomères cationiques $C_{cat}$ dont peuvent dériver les unités cationiques $C_{cat}$ sont:

- le méthylsulfate de triméthylammoniumpropylméthacrylamide (MAPTA MeS),
- le chlorure de (3-méthacrylamidopropyl)triméthylammonium (MAPTAC),
- le chlorure ou méthylsulfate de (3-acrylamidopropyl)triméthylammonium (APTAC ou APTA MeS),
- le chlorure de diméthylaminopropylméthacrylamide,N-(3-chloro-2-hydroxypropyl) triméthylammonium (DIQUAT chlorure),
- le methylsulfate de diméthylaminopropylméthacrylamide,N-(3-methylsulfate-2-hydroxypropyl) triméthylammonium (DIQUAT methylsulfate)

A titre d'exemples de <u>monomères neutres hydrophiles $C_{Nphile}$</u> dont peuvent dériver les unités neutres hydrophiles $C_{Nphile}$ on peut mentionner:

on peut mentionner:

- les hydroxyalkylesters d'acides $\alpha$-$\beta$ éthyléniquement insaturés comme les acrylates et méthacrylates d'hydroxyéthyle, d'hydroxypropyle, le glycérol monométhacrylate...
- les amides $\alpha$-$\beta$ éthyléniquement insaturés comme l'acrylamide, le méthacrylamide, le N,N-diméthyl méthacrylamide, le N-méthylolacrylamide ...
- les monomères $\alpha$-$\beta$ éthyléniquement insaturés portant un segment polyoxyalkyléné hydrosoluble du type polyoxyde d'éthylène, comme les polyoxyde d'éthylène $\alpha$-méthacrylates (BISOMER S20W, S10W, ... de LAPOR-

TE) ou $\alpha,\omega$-diméthacrylates, le SIPOMER BEM de RHODIA (méthacrylate de polyoxyéthylène $\omega$-béhényle), le SIPOMER SEM-25 de RHODIA (méthacrylate de polyoxyéthylène $\omega$-tristyrylphényle) ...

- l'alcool vinylique,
- les monomères $\alpha$-$\beta$ éthyléniquement insaturés précurseurs d'unités ou de segments hydrophiles tels que l'acétate de vinyle qui, une fois polymérisés, peuvent être hydrolysés pour engendrer des unités alcool vinylique ou des segments alcool polyvinylique
- les vinyllactmaes, comme les vinylpyrrolidones, ou le N-vinylcaprolactame,
- les monomères $\alpha$-$\beta$ éthyléniquement insaturés de type uréido et en particulier le méthacrylamido de 2-imidazolidinone éthyle (Sipomer WAM II de RHODIA)
- le nonethyleneglycolmethyletheracrylate ou le nonethyleneglycolmethylethermethacrylate
- leurs mélanges ou associations.

A titre d'exemples de monomères <u>neutres hydrophobes $C_{Nphobe}$</u> dont peuvent dériver des unités neutres hydrophobes $C_{Nphobe}$, on peut mentionner:

- les monomères vinylaromatiques tels que styrène, alpha-méthylstyrène, vinyltoluène...
- les halogénures de vinyle ou de vinylidène, comme le chlorure de vinyle, chlorure de vinylidène
- les $C_1$-$C_{12}$ alkylesters d'acides $\alpha$-$\beta$ monoéthyléniquement insaturés tels que les acrylates et méthacrylates de méthyle, éthyle, butyle, acrylate de 2-éthylhexyle ...
- les esters de vinyle ou d'allyle d'acides carboxyliques saturés tels que les acétates, propionates, versatates, stéarates ... de vinyle ou d'allyle
- les nitriles $\alpha$-$\beta$ monoéthyléniquement insaturés contenant de 3 à 12 atomes de carbone, comme l'acrylonitrile, le methacrylonitrile ...
- les $\alpha$-oléfines comme l'éthylène ...
- les diènes conjugués, comme le butadiène, l'isoprène, le chloroprène,
- les monomères susceptibles de générer des chaînes polydiméthylsiloxane (PDMS). Ainsi la partie B peut être un silicone, par exemple une chaîne polydiméthylsiloxane ou un copolymère comprenant des unités diméthylsiloxy,
- le diethyleneglycolethyletheracrylate ou le diethyleneglycolethylethermethacrylate
- leurs mélanges ou associations.

A titre d'exemples de <u>monomères anioniques ou potentiellement anioniques $C_A$</u> dont peuvent dériver des unités anioniques ou potentiellement <u>anioniques $C_A$</u>, on peut mentionner :

- des monomères possédant au moins une fonction carboxylique, comme les acides carboxyliques $\alpha$-$\beta$ éthyléniquement insaturés ou les anhydrides correspondants, tels que les acides ou anhydrides acrylique, méthacrylique, maleique, l'acide fumarique, l'acide itaconique, le N-méthacroyl alanine, le N-acryloylglycine et leurs sels hydrosolubles
- des monomères précurseurs de fonctions carboxylates, comme l'acrylate de tertiobutyle, qui engendrent, après polymérisation, des fonctions carboxyliques par hydrolyse.
- des monomères possédant au moins une fonction sulfate ou sulfonate, comme le 2-sulfooxyethyl méthacrylate, l'acide vinylbenzène sulfonique, l'acide allyl sulfonique, le 2-acrylamido-2méthylpropane sulfonique, l'acrylate ou le méthacrylate de sulfoethyle, l'acrylate ou le méthacrylate de sulfopropyle et leurs sels hydrosolubles
- des monomères possédant au moins une fonction phosphonate ou phosphate, comme l'acide vinylphosphonique,... les esters de phosphates éthyléniquement insaturés tels que les phosphates dérivés du méthacrylate d'hydroxyéthyle (Empicryl 6835 de RHODIA) et ceux dérivés des méthacrylates de polyoxyalkylènes et leurs sels hydrosolubles
- leurs mélanges ou associations.

A titre d'exemples de <u>monomères zwitterioniques $C_Z$</u> dont peuvent dériver des unités zwitterioniques $C_Z$, on peut mentionner:

- les monomères portant un groupe carboxybétaïne,
- les monomères portant un groupe sulfobétaïne, par exemple le sulfopropyl diméthyl ammonium éthyl méthacrylate (SPE), le sulfoéthyl diméthyl ammonium éthyl méthacrylate, le sulfobutyl diméthyl ammonium éthyl méthacrylate, le sulfohydroxypropyl diméthyl ammonium éthyl méthacrylate (SHPE), le sulfopropyl diméthylammonium propyl acrylamide, le sulfopropyl diméthylammonium propyl méthacrylamide (SPP), le sulfohydroxypropyl diméthyl ammonium propyl méthacrylamido (SHPP), le sulfopropyl diéthyl ammonium éthyl méthacrylate, ou le sulfohydroxypropyl diéthyl ammonium éthyl méthacrylate,
- les monomères portant un groupe phosphobétaïnes, comme le phosphatoéthyl triméthylammonium éthyl méthacrylate.

- leurs mélanges ou associations.

Les <u>monomères R réticulants</u> dont peuvent dériver des unités réticulantes R, peuvent notamment être choisis parmi des composés organiques comportant au moins deux insaturations éthyléniques et au plus 10 insaturations et connus comme étant réactifs par voie radicalaire. De préférence, ces monomères présentent deux ou trois insaturations éthyléniques.

Ainsi, on peut notamment citer les dérivés acryliques, méthacryliques, acrylamido, méthacrylamido, ester vinylique, éther vinylique, diénique, styrénique, alpha-méthyl styrénique et allylique. Ces monomères peuvent aussi renfermer des groupements fonctionnels autres que les insaturations éthyléniques, par exemple des fonctions hydroxyle, carboxyle, ester, amide, amino ou amino substitués, mercapto, silane, epoxy ou halogéno.

Les monomères appartenant à ces familles sont le divinylbenzène et les dérivés du divinylbenzène, le méthacrylate de vinyle, l'anhydride d'acide méthacrylique, le méthacrylate d'allyle, le diméthacrylate d'éthylèneglycol, le phénylène diméthacrylate, le diméthacrylate de diéthylène glycol, le diméthacrylate de triéthylène glycol, le diméthacrylate de tétraéthylène glycol, le diméthacrylate de polyéthylène glycol 200, le diméthacrylate de polyéthylène glycol 400, le 1,3-diméthacrylate de butanediol, le 1,4-diméthacrylate de butanediol, le 1,6-diméthacrylate de hexanediol, le 1,12-diméthacrylate de dodécanediol, le 1,3-diméthacrylate de glycérol, le diméthacrylate de diuréthane, le triméthacrylate de triméthylolpropane. Pour la famille des acrylates multifonctionnels, on peut notamment citer l'acrylate de vinyle, le diacrylate de bisphénol A époxy, le diacrylate de dipropylèneglycol, le diacrylate de tripropylèneglycol, le diacrylate de polyéthylène glycol 600, le diacrylate d'éthylène glycol, le diacrylate de diéthylène glycol, le diacrylate de triéthylène glycol, le diacrylate de tetraéthylène glycol, le diacrylate de néopentyl glycol éthoxylé, le diacrylate de butanediol, le diacrylate d'hexanediol, le diacrylate d'uréthane aliphatique, le triacrylate de triméthylolpropane, le triacrylate de triméthylolpropane éthoxylé, le triacrylate de triméthylolpropane propoxylé, le triacrylate de glycérol propoxylé, le triacrylate d'uréthane aliphatique, le tétraacrylate de triméthylolpropane, le pentaacrylate de dipentaérytritol. Concernant les éthers vinyliques, on peut notamment citer le vinyl crotonate, le diéthylène glycoldivinyléther, l'ether divinylique de butanediol-1,4, le triéthylèneglycol divinyl éther. Pour les dérivés allyliques, on peut notamment citer le diallyl phtalate, le diallyldiméthylammonium chloride, le diallyl malléate, le sodium diallyloxyacetate, le diallylphenylphosphine, le diallylpyrocarbonate, le diallyl succinate, le N,N'-diallyltartardiamide, le N,N-diallyl-2,2,2-trifluoroacétamide, l'ester allylique du diallyloxy acide acétique, le 1,3-diallylurée, la triallylamine, le triallyl trimesate, le triallyl cyanurate, le triallyl trimellitate, le triallyl-1,3,5-triazine-2,4,6(1H, 3H, 5H)-trione. Pour les dérivés acrylamido, on peut notamment citer le N,N'-méthylènebisacrylamide, le N,N'-méthylènebismethacrylamide, le glyoxal bisacrylamide, le diacrylamido acide acétique. En ce qui concerne les dérivés styréniques, on peut notamment citer le divinylbenzène et le 1,3-diisopropénylbenzène. Dans le cas des monomères diéniques, on peut notamment citer le butadiène, le chloroprène et l'isoprène.

Comme monomères multiéthyléniquement insaturés, on préfère le N,N'-méthylènebisacrylamide (MBA), le divinylbenzène (DVB), le diacrylate d'éthylène glycol, le triallycyanurate (TAC) ou le triacrylate de triméthylolpropane.

Ces monomères multiéthyléniquement insaturés peuvent être utilisés seuls ou en mélanges.

Si le microgel comprend des unités $C_N$, il peut avantageusement s'agir d'unités $C_{Nphile}$ dérivant d'un monomère neutre hydrophile $C_{Nphile}$. Le rapport en moles entre les unités $C_{cat}$ et les unités $C_N$, de préférence $C_{Nphile}$, peut notamment être compris entre 1/99 et 99/1, de préférence entre 1/99 et 50/50, de préférence entre 1/99 et 40/60, de préférence entre 1/99 et 25/75, par exemple entre 2/99 et 10/90.

Des microgels dont la composition en unités C est la suivante peuvent notamment être préparés:

- APTAC/AM, par exemple avec un rapport en moles APTAC/AM de 1/99 à 40/60 de préférence de 5/95 à 30/70.
- DIQUAT/AM, par exemple avec un rapport en moles DIQUAT/AM de 1/99 à 10/90
- MAPTAC/AM, par exemple avec un rapport en moles MAPTAC/AM de 1/99 à 10/90

<u>Procédés utiles pour la préparation du microgel</u>

Tous les procédés permettant de préparer des microgels tels que décrits ci-dessus peuvent être utilisés.

Des procédés particulièrement avantageux mettent en oeuvre une polymérisation contrôlée (ou «vivante»), à l'aide d'un agent ou d'un groupe de contrôle (parfois dénommé groupe de transfert), par exemple par un procédé de polymérisation radicalaire contrôlée (ou «vivante»). De tels procédés sont connus de l'homme du métier. On mentionne qu'il n'est pas exclu d'utiliser d'autres méthodes, notamment les polymérisations par ouverture de cycle (notamment anionique ou cationique), les polymérisations anioniques ou cationiques.

A titre d'exemples de procédés de polymérisation radicalaire dite vivante ou contrôlée, on peut notamment se référer aux procédés suivants:

- les procédés des demandes WO 98/58974, WO 00/75207 et WO 01/42312 qui mettent en oeuvre une polymérisation radicalaire contrôlée par des agents de contrôle de type xanthates,

- le procédé de polymérisation radicalaire contrôlée par des agents de control de type dithioesters ou trithiocarbonates de la demande WO 98/01478,
- le procédé de polymérisation radicalaire contrôlée par des agents de contrôle de type dithiocarbamates de la demande WO 99/31144,
- le procédé de polymérisation radicalaire contrôlée par des agents de contrôle de type dithiocarbazates de la demande WO 02/26836,
- le procédé de polymérisation radicalaire contrôlée par des agents de contrôle de type dithiophosphoroesters de la demande WO 02/10223,
 (éventuellement les copolymères obtenus comme ci-dessus par polymérisation radicalaire contrôlée, peuvent subir une réaction de purification de leur extrémité de chaîne soufrée, par exemple par des procédés de type hydrolyse, oxydation, réduction, pyrolyse ou substitution)
- le procédé de la demande WO 99/03894 qui met en oeuvre une polymérisation en présence de précurseurs nitroxydes,
- le procédé de la demande WO 96/30421 qui utilise une polymérisation radicalaire par transfert d'atome (ATRP),
- le procédé de polymérisation radicalaire contrôlée par des agents de contrôle de type iniferters selon l'enseignement de Otu et al., Makromol. Chem. Rapid. Commun., 3, 127 (1982),
- le procédé de polymérisation radicalaire contrôlée par transfert dégénératif d'iode selon l'enseignement de Tatemoto et al., Jap. 50, 127, 991 (1975), Daikin Kogyo Co ltd Japan et Matyjaszewski et al., Macromolecules, 28, 2093 (1995),
- le procédé de polymérisation radicalaire contrôlée par les dérivés du tetraphényléthane, divulgué par D. Braun et al. Dans Macromol. Symp. 111,63 (1996), ou encore,
- le procédé de polymérisation radicalaire contrôlée par des complexes organocobalt décrit par Wayland et al. Dans J.Am.Chem.Soc. 116,7973 (1994)
- le procédé de polymérisation radicalaire contrôlée par du diphénylethylène (WO 00/39169 ou WO 00/37507).

Les polymérisations radicalaires contrôlées ou vivantes mettant un oeuvre des agents ou groupes de contrôle (ou «agents ou groupes de transfert») présentant un groupe -S-CS- (Xanthates, dithioesters, trithiocarbonates, dithiocabamates, dithiocarbazates..) sont particulièrement intéressantes.

Un procédé pratique pour la préparation du microgel est un procédé de préparation comprenant l'étape a) suivante:

étape a) polymérisation, de préférence polymérisation radicalaire contrôlée, d'un mélange de monomères comprenant:

- au moins un monomère R réticulant multiéthyléniquement insaturé, et
- au moins un monomère C monoéthyléniquement insaturé, comprenant:

 - au moins un monomère $C_{cat}$ cationique ou potentiellement cationique, et
 - éventuellement un monomère $C_N$ neutre hydrophile ou hydrophobe,

le procédé ne comprenant pas d'étape subséquente de polymérisation pouvant mener à la formation de branches macromoléculaires en périphérie.

Le rapport molaire entre le(s) monomère(s) C et le(s) monomère(s) R est de préférence supérieur ou égal à 50/50 (=1), de préférence supérieur à 60/40, par exemple de 60/40 à 99,99 / 0,01, par exemple de 60/40 à 99,9 / 0,1, de préférence de 60/40 à 99/1, de préférence de 80/20 à 95/5. Le rapport entre les unités C et les unités R peut être identique.

La polymérisation de l'étape a) peut notamment être opérée, en mettant en présence:

- les monomères,
- un agent de contrôle par exemple un agent comprenant un groupe -S-CS-, et
- une source de radicaux libre.

De telles typologies de polymérisations sont connues de l'homme du métier et ont fait l'objet de nombreuses publications. On se réfère notamment à la liste établie ci-dessus.

On mentionne que l'étape a) peut être suivie d'une étape b) optionnelle de modification chimique des chaînes macromoléculaires et/ou de désactivation de groupes de transfert portés par des chaînes macromoléculaires, de destruction ou purification de sous-produits de la modification chimique et/ou désactivation.

Des étapes de modification chimique des chaînes macromoléculaires visent à ajouter aux chaînes des groupes fonctionnels, à supprimer des groupes des chaînes macromoléculaires ou à substituer des groupes de chaînes macromoléculaires. Ces groupes peuvent notamment être portés par des unités dérivant de monomères ou portés en des bouts de chaîne macromoléculaire. De tels processus sont connus de l'homme du métier. On cite par exemple des étapes d'hydrolyse complète ou partielle, ou des étapes de réticulation complète ou partielle.

On peut opérer la désactivation de groupes de transfert portés par les chaînes macromoléculaires, et/ou purification et/ou destruction de sous-produits de modification chimique et/ou de désactivation. Il peut s'agir d'une réaction de purification ou de destruction de certaines espèces, par exemple par des procédés de type hydrolyse, oxydation, réduction, pyrolyse, ozonolyse ou substitution. Une étape d'oxydation avec de l'eau oxygénée est particulièrement appropriée pour traiter des espèces soufrées. On mentionne que certaines de ces réactions ou opérations peuvent avoir lieu en tout ou partie lors d'une étape de modification chimique.

L'étape a) de polymérisation sera généralement opérée en présence d'un agent de contrôle (ou agent de transfert), présentant un groupe de contrôle (ou groupe de transfert). Le groupe de contrôle est de préférence un groupe de formule -S-CS-. Il s'agit de préférence d'un agent de transfert non polymérique comprenant un groupe de contrôle de formule -S-CS-. Des groupes de contrôle de formule -S-CS- et des composés comprenant ces groupes, notamment des agents de contrôle sont connus de l'homme du métier et sont décrits dans la littérature. On se réfère notamment à la liste établie ci-dessus. On peut notamment les sélectionner selon leur réactivité vis-à-vis de certains monomères, et/ou selon leur solubilité dans le milieu réactionnel.

Le groupe de contrôle peut notamment comprendre un groupe de formule- S-CS-Z- où Z est un atome d'oxygène, un atome de carbone, un atome de souffre, un atome de phosphore ou un atome de silicium, ces atomes étant le cas échéant substitués de manière à avoir une valence appropriée. On peut notamment mettre en oeuvre un agent de type Xanthate, présentant un groupe de contrôle de formule -S-CS-O-.

A titre d'agents de contrôle particulièrement utiles, on cite:

- le O-ethyl-S-(1-methoxycarbonyl ethyl) xanthate de formule

$$(CH_3CH(CO_2CH_3))S(C=S)OEt$$

- le dibenzyltrithiocarbonate de formule $\varphi$-CH$_2$-S-CS-S-CH$_2$- $\varphi$
- le phénylbenzyldithiocarbonate de formule $\varphi$-S-CS- CH$_2$-$\varphi$
- le N,N-diethyl S-benzyldithiocarbamate de formule $(CH_3$-CH$_2)_2$N-CS-S-CH$_2$- $\varphi$.

L'étape a) de polymérisation sera généralement opérée en présence d'une source de radicaux libres. Cependant, pour certains monomères, tels que le styrène, les radicaux libres permettant d'initier la polymérisation peuvent être générés par un monomère monoéthyléniquement insaturé, à des températures suffisamment élevées généralement supérieures à 100°C. Il n'est pas, dans ce cas, nécessaire d'ajouter une source de radicaux libres supplémentaires.

La source de radicaux libres utile est généralement un initiateur de polymérisation radicalaire. L'initiateur de polymérisation radicalaire peut être choisi parmi les initiateurs classiquement utilisés en polymérisation radicalaire. Il peut s'agir par exemple d'un des initiateurs suivants :

- les peroxydes d'hydrogène tels que : l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis [2-méthyl-N-(2-hydroxyéthyl) propionamide], le 2,2'-azobis(isobutyramide) dihydrate,
- les systèmes redox comportant des combinaisons telles que :
- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

La quantité d'initiateur à utiliser est déterminée de préférence de manière à ce que la quantité de radicaux générés soit d'au plus 50 % en mole, de préférence d'au plus 20 % en mole, par rapport à la quantité d'agent de control ou de transfert.

On mentionne que la polymérisation peut être opérée en chauffant, de manière connue, de manière et initier et/ou à maintenir le processus de polymérisation. On peut par exemple opérer à des températures de 50°C à 100°C. Le degré de polymérisation, et les masses, peuvent être contrôlés en contrôlant de temps de polymérisation. On peut notamment stopper la polymérisation en baissant la température.

Les polymérisations peuvent être effectuées sous toute forme physique appropriée, par exemple par polymérisation en solution dans un milieu aqueux (comprenant de l'eau) par exemple dans l'eau ou dans un milieu hydro-alcoolique (hydro-éthanolique par exemple) ou dans un solvant par exemple un alcool (éthanol par exemple) ou le THF, ou par polymérisation en émulsion, de préférence en émulsion inverse, le cas échéant en contrôlant la température et/ou le pH afin de rendre des espèces liquides et/ou solubles ou insolubles. La polymérisation est de préférence opérée en solution, par opposition à des polymérisations en phase dispersée (émulsion, microémulsion, polymérisation avec précipitation du polymère formé). On préfère conserver le microgel en solution après une telle polymérisation.

On précise que les microgels sont de préférence obtenus directement après la polymérisation et l'éventuelle désactivation, élimination ou destruction de groupes de transfert, sans étape de fonctionnalisation après la polymérisation.

Les quantités respectives et relatives de monomère(s) C, de monomère(s) R réticulant(s), et d'agent de contrôle peuvent être variées de manière à contrôler la taille des macromolécules générées, et/ou de manière à contrôler la non formation d'un réseau macromoléculaire macroscopique. On donne quelques indications ci-dessous:

- à quantités constantes de monomère(s) C et d'agent de contrôle, lorsqu'on augmente la quantité de monomère(s) R, on augmente les masses moléculaires et l'indice de polydispersité, et on peut former des réseaux macromoléculaires macroscopiques.
- à quantités constantes de monomère(s) C et de monomère(s) R, lorsqu'on diminue la quantité d'agent de contrôle, on augmente les masses moléculaires et l'indice de polydispersité on peut former des réseaux macromoléculaires macroscopiques.
- à quantités constantes d'agent de contrôle et de monomère(s) R, si des unités $C_N$ sont présentes, lorsqu'on diminue le rapport molaire $C_{cat}/C_N$, on peut former des réseaux macromoléculaires macroscopiques.

De préférence la polymérisation est opérée en présence d'un agent de contrôle en quantité telle que ($N_{Control}$ * $n_{Control}$ / $n_T$) est de 0,05 à 10%, de préférence de 0,1 à 10% de préférence de 0,2 à 5%.

De préférence la polymérisation est opérée en présence de monomères R réticulants en quantité telle que ($N_R/2$) * ($n_R$ / $n_T$) est de 0,01 à 40% en moles, de préférence de 0,1 à 40% en moles , de préférence de 1 à 40% en moles par exemple de 5 à 20%.

La polymérisation est de préférence, notamment dans l'une ou les deux gammes mentionnées ci-dessus, opérée de en présence d'un agent de contrôle et de monomère(s) R réticulant(s) en quantités telles que r ≥ 0,05, de préférence r ≥ 0,1, de préférence r ≥ 0,2, de préférence r ≥ 0,25, de préférence r ≥ 0,3. Plus r est élevé, plus on s'éloigne d'une zone potentielle de formation de réseaux macromoléculaires macroscopiques non désirés. On a trouvé que la présence des monomères $C_{cat}$ pouvait permettre d'opérer dans des zones où r est relativement faible, plus faible qu'en l'absence d'un tel monomère, ce qui élargit le domaine d'opérabilité (notamment le domaine où on ne forme pas de réseaux macromoléculaires macroscopiques), et élargit la gamme de produit qu'il est possible de préparer, notamment en terme de taille et/ou de densité des molécules de microgels. Il n'est pas exclu que le nombre r soit supérieur ou égal à 0,5 ou 1.

On a notamment trouvé que la mise en oeuvre de monomères $C_{cat}$ pouvait élargir ou déplacer les domaines de proportions relatives entre le(s) monomère(s) C, les monomère(s) R et l'agent de contrôle, dans lesquels on forme des macromolécules de taille contrôlée, par exemple plus petites, et/ou dans lesquels on ne forme pas de réseaux macromoléculaires macroscopiques (trop visqueux).

Utilisations

Les microgels de l'invention peuvent notamment être utilisés pour le traitement et/ou la modification de surfaces. Ils peuvent notamment être utilisés dans le domaine des revêtements (par exemple dans le domaine des peintures), soit comme additif au revêtement, soit comme prétraitement par exemple destiné à améliorer l'adhésion d'un revêtement ultérieur. Les microgels de l'invention peuvent notamment procurer des propriétés de cicatrisations des revêtements.

Les microgels de l'invention peuvent notamment être utilisés dans le domaine médical. Dans ce domaine ils peuvent notamment être utilisés comme supports d'actifs, permettant le cas échéant une libération contrôlée des l'actifs. Ils peuvent être notamment utilisés comme biomatériaux ou matériaux biocompatibles sur des prothèses ou des patchs ou des pansements.

Les microgels de l'invention peuvent notamment être utilisés pour la microstructuration ou nanostructuration de surfaces.

Les microgels de l'invention peuvent notamment être utilisés comme supports ou vecteurs de divers matériaux, par exemple pour des matériaux inorganiques, ou pour des enzymes. Ils peuvent par exemple être utilisés pour supporter des catalyseurs, notamment des catalyseurs inorganiques. Ils peuvent être utilisés pour la synthèse de supports inorganiques nanométriques. On parle parfois de «templates» en anglais.

Les microgels de l'invention peuvent notamment être utilisés pour piéger ou séparer ou entrainer des molécules. Par exemple ils peuvent être utilisés pour piéger ou séparer des molécules présentant une affinité particulière avec les unités cationiques, par exemple des unités anioniques. Ils peuvent être utilisés dans des processus de purification, par exemple dans des processus de purification des eaux.

Les microgels de l'invention peuvent être utilisés comme additifs de modification de la rhéologie de compositions liquides, notamment de compositions liquides aqueuses. Il peut s'agir d'une fluidification, ou d'une viscosification s'ils sont mis en interaction avec d'autres produits adaptés.

Les microgels de l'invention peuvent notamment être utilisés dans des encres, ou dans des produits papetiers, par exemples dans des compositions de couchage du papier.

Les microgels de l'invention peuvent notamment être utilisés dans des compositions cosmétiques, notamment dans des compositions de traitement de la peau et/ou des cheveux, notamment dans des compositions destinées à être rincées. Les compositions cosmétiques d'intérêt peuvent notamment comprendre au moins un tensioactif, comme un tensioactif anionique, amphotère, cationique et/ou non ionique. A titre de compositions on cite notamment les crèmes, laits ou lotions non rincées destinées à être appliquées sur la peau, les compositions de protection solaire, les compositions de teinture des cheveux, les shampooings, les après shampooings, les gels-douche, les nettoyants pour le visage.

Les microgels de l'invention peuvent notamment être utilisés dans des compositions d'exploitation de gisement de pétrole et/ou de gaz. Il peut notamment s'agir de fluides de forage, de fluides de complétion, de fluides de stimulations, de fluides de fracturations, de compositions de production, de composition de récupération assistée du pétrole.

D'autres détails ou avantages de l'invention pourront apparaitre au vue des exemples qui suivent, sans caractère limitatif.

EXEMPLES

Dans les exemples donnés ci-dessous, les réactions de polymérisation sont effectuées sous léger balayage d'argon dans de simples appareillages en verre immergés dans un bain d'huile préchauffé à 70°C. Comme générateurs de radicaux libres, on utilise le 4, 4'-azobis- de l'acide 4-cyanopentanoique (ACP) ou 2,2'azobis(2-methylpropionamidine) dihydrochloride (V50). Le réticulant utilisé dans les exemples suivant est le N,N'-méthylène-(bis) acrylamide (MBA). Le monomère cationique utilisé ci-dessous est l'APTAC. Dans toutes les synthèses ci-dessous on utilise une solution à 75 % massique d'APTAC dans l'eau. Le monomère hydrophile neutre utilisé ci-dessous est l'acrylamide (AM), et pour des raisons de toxicité il est manipulé à partir des solutions aqueuses.

La conversion du polymère de première génération est évaluée par l'analyse des (co)polymères en chromatographie d'exclusion stérique (CES), ou par chromatographie gaz (CG) des monomères résiduels, ou par chromatographie liquide à haute performance (CLHP). Les masses molaires moyennes en poids Mw absolues (g.mol$^{-1}$) sont mesurées par CES MALS. La distribution des masses molaires est évaluée par l'indice de polymolécularité ($I_p$) correspondant au rapport de la masse molaire moyenne en poids et de la masse molaire moyenne en nombre ($I_p = M_w/M_n$).

Ces exemples montrent que la masse molaire moyenne en nombre des microgels issus de la polymérisation radicalaire des monomères éthyléniquement insaturés est notamment déterminée par le rapport molaire initial entre le monomère et l'agent de contrôle. La détection UV à 290 nm en chromatographie CES nous renseigne sur la présence du fragment d'agent de contrôle au bout des chaînes polymères, caractéristique du caractère contrôlé de la polymérisation.

Abréviations:

APTAC = acrylate chlorure de (3-acrylamidopropyl)triméthylammonium
MBA = N,N'-méthylènebisacrylamide
AM = Acrylamide
Xant= xanthate de type EtOC(=S)SCH(CH$_3$)COOCH$_3$

ACP = 4, 4'-azobis- de l'acide 4-cyanopentanoique
V50 = 2,2'azobis(2-methylpropionamidine)dihydrochloride

Exemple 1 - Préparation d'un microgel APTAC/MBA

Dans un ballon bicol surmonté d'un réfrigérant, on ajoute 0,190 g (9,135x10$^{-4}$ mol) du xanthate EtOC(=S)SCH (CH$_3$)COOCH$_3$, 7 g d éthanol, 7,83g d'eau déionisée, 4,672g (1,70 x10$^{-2}$ mol) d'APTAC, 0,334 g (2,20x10$^{-3}$ mol) de MBA,. Le mélange réactionnel est porté à 65 °C. A cette température 0,023 g (8,48 x10$^{-5}$ mol) de V50 sont ajoutés en une fois. La réaction est prolongée pendant 5h.

Mn = 15700 (CES MALS); Mw = 50000 (CES MALS); I$_p$ = 3,2; Conversion des monomères (CLHP) >99%.

Exemple 2 - Préparation d'un microgel APTAC/AM/MBA

Dans un ballon bicol surmonté d'un réfrigérant, on ajoute 0,827 g (3,98x10$^{-3}$ mol) du xanthate EtOC(=S)SCH (CH$_3$)COOCH$_3$, 21 g d éthanol, 21g d'eau déionisée, 7,097g (2,58 x10$^{-2}$ mol) d'APTAC, 8,55g (6,02x10$^{-2}$ mol) d'Am, 1,478 g (9,66x10$^{-3}$ mol) de MBA,. Le mélange réactionnel est porté à 65 °C. A cette température 0,108 g (3,98 x10$^{-4}$ mol) de V50 sont ajoutés en une fois. La réaction-est prolongée pendant 5h.
(CES MALS) Mn = 2075, Mw = 104590, I$_p$ 50,4. Conversion des monomères (CLHP) >98%.

**Revendications**

1. Microgel polymérique réticulé chimiquement présentant un coeur C comprenant :

   - des unités réticulantes R dérivant d'un monomère R réticulant comprenant au moins deux groupes polymérisables, et
   - des unités de coeur C dérivant d'au moins un monomère C comprenant un seul groupe polymérisable, comprenant :
   - des unités cationiques C$_{cat}$ dérivant d'au moins un monomère C$_{cat}$ cationique choisi parmi les monomères suivants :

     - le méthylsulfate de triméthylammoniumpropylméthacrylamide (MAPTA MeS),
     - le chlorure de (3-méthacrylamidopropyl)triméthylammonium (MAPTAC),
     - le chlorure ou méthylsulfate de (3-acrylamidopropyl)triméthylammonium (APTAC ou APTA MeS),
     - le chlorure de diméthylaminopropylméthacrylamide,N-(3-chloro-2-hydroxypropyl) triméthylammonium (DIQUAT chlorure), et
     - le méthylsulfate de diméthylaminopropylméthacrylamide,N-(3-méthylsulfate-2-hydroxypropyl) triméthylammonium (DIQUAT méthylsulfate), et

   - éventuellement des unités neutres C$_N$, hydrophiles ou hydrophobes dérivant d'au moins un monomère C$_N$ neutre hydrophile ou hydrophobe,

   le microgel étant différent d'un copolymère étoile comprenant des branches macromoléculaires en périphérie du coeur.

2. Microgel selon la revendication 1, **caractérisé en ce qu'**il est susceptible d'être obtenu par un procédé mettant en oeuvre un procédé de polymérisation radicalaire contrôlée.

3. Microgel selon l'une des revendications précédentes **caractérisé en ce que** les unités réticulantes R sont des unités dérivant d'un monomère diéthyléniquement insaturé ou triéthylèniquement insaturé.

4. Microgel selon l'une des revendications précédentes, **caractérisé en ce que** le microgel est obtenu par polymérisation, de préférence par polymérisation radicalaire contrôlée, d'un mélange de monomères comprenant :

   - au moins un monomère R réticulant comprenant au moins deux groupes polymérisables, de préférence un monomère multiéthyléniquement insaturé, et
   - au moins un monomère C comprenant un seul groupe polymérisable, de préférence un monomère monoéthyléniquement insaturé, comprenant :

- au moins un monomère $C_{cat}$ cationique choisi parmi les monomères suivants :
- le méthylsulfate de triméthylammoniumpropylméthacrylamide (MAPTA MeS),
- le chlorure de (3-méthacrylamidopropyl)triméthylammonium (MAPTAC),
- le chlorure ou méthylsulfate de (3-acrylamidopropyl)triméthylammonium (APTAC ou APTA MeS),
- le chlorure de diméthylaminopropylméthacrylamide,N-(3-chloro-2-hydroxypropyl) triméthylammonium (DIQUAT chlorure), et
- le méthylsulfate de diméthylaminopropylméthacrylamide,N-(3-méthylsulfate-2-hydroxypropyl) triméthyl-lammonium (DIQUAT méthylsulfate), et

- éventuellement un monomère $C_N$ neutre hydrophile ou hydrophobe.

5. Microgel selon la revendication 4, **caractérisé en ce que** le rapport molaire entre le(s) monomère(s) C et le monomère R réticulant est supérieur ou égal à 1.

6. Microgel selon l'une des revendications précédentes, **caractérisé en ce qu'**il comprend des unités neutres hydrophiles $C_{Nphile}$ dérivant d'un monomère neutre hydrophile $C_{Nphile}$.

7. Microgel selon la revendication 6, **caractérisé en ce que** le rapport en moles entre les unités $C_{cat}$ et les unités $C_{Nphile}$ est compris entre 1/99 et 50/50.

8. Microgel selon l'une des revendications précédentes, **caractérisé en ce que** les unités neutres $C_N$ sont des unités neutres hydrophiles $C_{Nphile}$ dérivant de monomères $C_{Nphile}$ choisis parmi les monomères suivants :

- les acrylates et méthacrylates d'hydroxyéthyle,
- l'acrylamide,
- le méthacrylamide,
- l'alcool vinylique,
- la vinylpyrrolidone,
- le vinylcaprolactame.

9. Microgel selon l'une des revendications précédentes, **caractérisé en ce qu'**il est compris dans un milieu aqueux.

10. Procédé de préparation d'un microgel selon l'une des revendications précédentes, comprenant une étape de polymérisation radicalaire contrôlée, d'un mélange de monomères comprenant :

- au moins un monomère R réticulant multiéthyléniquement insaturé, et
- au moins un monomère C monoéthyléniquement insaturé, comprenant :
- au moins un monomère $C_{cat}$ cationique choisi parmi les monomères suivants :

- le méthylsulfate de triméthylammoniumpropylméthacrylamide (MAPTA MeS),
- le chlorure de (3-méthacrylamidopropyl)triméthylammonium (MAPTAC),
- le chlorure ou méthylsulfate de (3-acrylamidopropyl)triméthylammonium (APTAC ou APTA MeS),
- le chlorure de diméthylaminopropylméthacrylamide,N-(3-chloro-2-hydroxypropyl) triméthylammonium (DIQUAT chlorure), et
- le méthylsulfate de diméthylaminopropylméthacrylamide,N-(3-méthylsulfate-2-hydroxypropyl) triméthyl-lammonium (DIQUAT méthylsulfate), et

- éventuellement un monomère $C_N$ neutre hydrophile ou hydrophobe,

le procédé ne comprenant pas d'étape subséquente de polymérisation pouvant mener à la formation de branches macromoléculaires en périphérie.

11. Procédé selon la revendication 10, **caractérisé en ce que** la polymérisation radicalaire contrôlée est effectuée par mise en présence des monomères, d'une source de radicaux libre et d'un agent de contrôle.

12. Procédé selon la revendication 11, **caractérisé en ce que** l'agent de contrôle est un agent présentant un groupe de contrôle de formule -S-CS-.

**13.** Procédé selon l'une la revendication 12, **caractérisé en ce que** l'agent de contrôle est un Xanthate présentant un groupe de formule -S-CS-O-.

**14.** Procédé selon l'une des revendications 10 à 13, **caractérisé en ce que** l'étape de polymérisation est opérée en milieu aqueux, alcoolique, ou hydro-alcoolique.

**Claims**

**1.** Chemically crosslinked polymeric <u>microgel</u> presenting a core C comprising:

- crosslinking units R deriving from a crosslinking monomer R comprising at least two polymerisable groups, and
- core units C deriving from at least one monomer C comprising a single polymerisable group, comprising:

- cationic units $C_{cat}$ deriving from at least one cationic monomer $C_{cat}$ selected from the following monomers:

- trimethylammoniumpropylmethacrylamide methyl sulfate (MAPTA MeS),
- (3-methacrylamidopropyl)trimethylammonium chloride (MAPTAC),
- (3-acrylamidopropyl)trimethylammonium chloride or methyl sulfate (APTAC or APTA MeS);
- dimethylaminopropylmethacrylamide, N-(3-chloro-2-hydroxypropyl) trimethylammonium chloride (DIQUAT chloride), and
- dimethylaminopropylmethacrylamide, N-(3-methylsulfate-2-hydroxypropyl) trimethylammonium methyl sulfate (DIQUAT methyl sulfate), and

- optionally neutral hydrophilic or hydrophobic units $C_N$ deriving from at least one neutral hydrophilic or hydrophobic monomer $C_N$,

the microgel being different from a star copolymer comprising macromolecular branches at the periphery of the core.

**2.** Microgel according to claim 1, **characterised in that** it is capable of being obtained by a process utilising a controlled radical polymerisation process.

**3.** Microgel according to one of the preceding claims, **characterised in that** the crosslinking units R are units deriving from a diethylenically unsaturated or triethylenically unsaturated monomer.

**4.** Microgel according to one of the preceding claims, **characterised in that** the microgel is obtained by polymerisation, preferably by controlled radical polymerisation, of a mixture of monomers comprising:

- at least one crosslinking monomer R comprising at least two polymerisable groups, preferably a multi-ethylenically unsaturated monomer, and
- at least one monomer C comprising a single polymerisable group, preferably a monoethylenically unsaturated monomer, comprising:

- at least one cationic monomer $C_{cat}$ selected from the following monomers:

- trimethylammoniumpropylmethacrylamide methyl sulfate (MAPTA MeS),
- (3-methacrylamidopropyl)trimethylammonium chloride (MAPTAC),
- (3-acrylamidopropyl)trimethylammonium chloride or methyl sulfate (APTAC or APTA MeS),
- dimethylaminopropylmethacrylamide, N-(3-chloro-2-hydroxypropyl) trimethylammonium chloride (DIQUAT chloride), and
- dimethylaminopropylmethacrylamide, N-(3-methylsulfate-2-hydroxypropyl) trimethylammonium methyl sulfate (DIQUAT methyl sulfate), and

- optionally a neutral hydrophilic or hydrophobic monomer $C_N$.

**5.** Microgel according to claim 4, **characterised in that** the molar ratio between the monomer(s) C and the crosslinking monomer R is greater than or equal to 1.

6. Microgel according to one of the preceding claims, **characterised in that** it comprises neutral hydrophilic units $C_{Nphile}$ deriving from a neutral hydrophilic monomer $C_{Nphile}$

7. Microgel according to claim 6, **characterised in that** the molar ratio between the $C_{cat}$ units and the $C_{Nphile}$ units is comprised between 1/99 and 50/50.

8. Microgel according to one of the preceding claims, **characterised in that** the neutral units $C_N$ are neutral hydrophilic units $C_{Nphile}$ deriving from $C_{Nphile}$ monomers selected from the following monomers:

   - hydroxyethyl methacrylates and acrylates
   - acrylamide
   - methacrylamide
   - vinyl alcohol
   - vinyl pyrrolidone
   - vinyl caprolactam.

9. Microgel according to one of the preceding claims, **characterised in that** it is comprised in an aqueous medium.

10. Process for the preparation of a microgel according to one of the preceding claims, comprising a controlled radical polymerisation step of a mixture of monomers comprising:

   - at least one multi-ethylenically unsaturated crosslinking monomer R, and
   - at least one monoethylenically unsaturated monomer C, comprising:

      - at least one cationic monomer $C_{cat}$ selected from the following monomers:

         - trimethylammoniumpropylmethacrylamide methyl sulfate (MAPTA MeS),
         - (3-methacrylamidopropyl)trimethylammonium chloride (MAPTAC),
         - (3-acrylamidopropyl)trimethylammonium chloride or methyl sulfate (APTAC or APTA MeS);
         - dimethylaminopropylmethacrylamide, N-(3-chloro-2-hydroxypropyl) trimethylammonium chloride (DIQUAT chloride), and
         - dimethylaminopropylmethacrylamide, N-(3-methylsulfate-2-hydroxypropyl) trimethylammonium methyl sulfate (DIQUAT methyl sulfate), and

      - optionally a neutral hydrophilic or hydrophobic monomer $C_N$,

   the process not comprising a subsequent polymerisation step that may lead to the formation of macromolecular branches at the periphery.

11. Process according to claim 10, **characterised in that** the controlled radical polymerisation is performed by bringing together the monomers, a free source of radicals and a control agent.

12. Process according to claim, 11. **characterised in that** the control agent is an agent having a control group of formula -S-CS-.

13. Process according to claim 12, **characterised in that** the control agent is a xanthate having a group of formula -S-CS-O-.

14. Process according to one of claims 10 to 13, **characterised in that** the polymerisation step is operated in an aqueous, alcoholic or hydroalcoholic medium.


**Patentansprüche**

1. Chemisch vernetztes polymeres Mikrogel, das einen Kern C hat, umfassend:

   - vernetzende Einheiten R, die aus einem vernetzenden Monomer R stammen, das mindestens zwei polymerisierbare Gruppen umfasst und,

- Kerneinheiten C, die aus mindestens einem Monomer C stammen, das eine einzige polymerisierbare Gruppe umfasst, umfassend:

- kationische Einheiten $C_{Cat}$, die aus mindestens einem kationischen Monomer $C_{Cat}$ stammen, das aus den folgenden Monomeren ausgewählt wird:

- Trimethylammoniumpropylmethacrylamidmethylsulfat (MAPTA MeS),
- (3-Methacrylamidopropyl)trimethylammoniumchlorid (MAPTAC),
- (3-Acrylamidopropyl)trimethylammoniumchlorid oder -methylsulfat (APTAC oder APTA MeS),
- Dimethylaminopropylmethacrylamid,N-(3-chloro-2-hydroxypropyl)trimethylammoniumchlorid (DIQUAT-Chlorid), und
- Dimethylaminopropylmethacrylamid,N-(3-methylsulfat-2-hydroxypropyl)trimethylammoniummethylsulfat (DIQUAT-Methylsulfat), und

- gegebenenfalls neutrale Einheiten $C_N$, die hydrophil oder hydrophob sind und aus mindestens einem hydrophilen oder hydrophoben neutralen Monomer $C_N$ stammen,

wobei sich das Mikrogel von einem sternförmigen Copolymer unterscheidet, das am Umfang des Kerns makromolekulare Zweige umfasst.

2. Mikrogel gemäß Anspruch 1, **dadurch gekennzeichnet, dass** es geeignet ist, durch ein Verfahren erhalten zu werden, das ein kontrolliertes Radikalpolymerisierungsverfahren durchführt.

3. Mikrogel gemäß einem der vorhergehenden Ansprüche, **dadurch gekennzeichnet, dass** die vernetzenden Einheiten R Einheiten sind, die aus einem diethylenisch ungesättigten oder trietyhlenisch ungesättigten Monomer stammen.

4. Mikrogel gemäß einem der vorhergehenden Ansprüche, **dadurch gekennzeichnet, dass** das Mikrogel durch Polymerisierung, vorzugsweise durch kontrollierte radikalische Polymerisierung aus einer Mischung von Monomeren erhalten wird, umfassend:

- mindestens ein vernetzendes Monomer R, das mindestens zwei polymerisierbare Gruppen umfasst, vorzugsweise ein multiethylenisch ungesättigtes Monomer, und
- mindestens ein Monomer C, das eine einzige polymerisierbare Gruppe umfasst, vorzugsweise ein monoethylenisch ungesättigtes Monomer, umfassend:

- mindestens ein kationisches Monomer $C_{cat}$, das aus den folgenden Monomeren ausgewählt wird:

- Trimethylammoniumpropylmethacrylamidmethylsulfat (MAPTA MeS),
- (3-Methacrylamidopropyl)trimethylammoniumchlorid (MAPTAC),
- (3-Acrylamidopropyl)trimethylammoniumchlorid oder -methylsulfat (APTAC oder APTA MeS),
- Dimethylaminopropylmethacrylamid,N-(3-chloro-2-hydroxypropyl)trimethylammoniumchlorid (DIQUAT-Chlorid), und
- Dimethylaminopropylmethacrylamid,N-(3-methylsulfat-2-hydroxypropyl)trimethylammoniummethylsulfat (DIQUAT-Methylsulfat), und

- gegebenenfalls ein hydrophiles oder hydrophobes neutrales Monomer $C_N$.

5. Mikrogel gemäß Anspruch 4, **dadurch gekennzeichnet, dass** das molare Verhältnis zwischen dem Monomer C (den Monomeren C) und dem vernetzenden Monomer R größer oder gleich 1 ist.

6. Mikrogel gemäß einem der vorhergehenden Ansprüche, **dadurch gekennzeichnet, dass** es hydrophile neutrale Einheiten $C_{Nphil}$ umfasst, die aus einem hydrophilen neutralen Monomer $C_{Nphil}$ stammen.

7. Mikrogel gemäß Anspruch 6, **dadurch gekennzeichnet, dass** das molare Verhältnis zwischen den Einheiten $C_{cat}$ und den Einheiten $C_{Nphil}$ zwischen 1/99 und 50/50 liegt.

8. Mikrogel gemäß einem der vorhergehenden Ansprüche, **dadurch gekennzeichnet, dass** die neutralen Einheiten

$C_N$ hydrophile neutrale Einheiten $C_{Npnil}$ sind, die aus Monomeren $C_{Nphil}$ stammen, die aus den folgenden Monomeren ausgewählt werden:

- Hydroxyethylacrylate und -methacrylate,
- Acrylamid,
- Methacrylamid,
- Vinylalkohol,
- Vinylpyrrolidon,
- Vinylcaprolactam.

9. Mikrogel gemäß einem der vorhergehenden Ansprüche, **dadurch gekennzeichnet, dass** es in einem wässrigen Medium enthalten ist.

10. Verfahren zum Herstellen eines Mikrogels gemäß einem der vorhergehenden Ansprüche, das einen Schritt des kontrollierten radikalischen Polymerisierens aus einer Mischung von Polymeren umfasst, umfassend:

- mindestens ein vernetzendes multiethylenisch ungesättigtes Monomer R, und
- mindestens ein monoethylenisch ungesättigtes Monomer C, umfassend:

- mindestens ein kationisches Monomer $C_{cat}$, das aus den folgenden Monomeren ausgewählt wird:

- Trimethylammoniumpropylmethacrylamidmethylsulfat (MAPTA MeS),
- (3-Methacrylamidopropyl)trimethylammoniumchlorid (MAPTAC),
- (3-Acrylamidopropyl)trimethylammoniumchlorid oder -methylsulfat (APTAC oder APTA MeS),
- Dimethylaminopropylmethacrylamid,N-(3-chloro-2-hydroxypropyl)trimethylammoniumchlorid (DIQUAT-Chlorid), und
- Dimethylaminopropylmethacrylamid,N-(3-methylsulfat-2-hydroxypropyl)trimethylammoniummethylsulfat (DIQUAT-Methylsulfat), und

- gegebenenfalls ein hydrophiles oder hydrophobes neutrales Monomer $C_N$,

wobei das Verfahren keinen nachfolgenden Polymerisierungsschritt aufweist, der dazu führen kann, dass am Umfang makromolekulare Zweige gebildet werden.

11. Verfahren gemäß Anspruch 10, **dadurch gekennzeichnet, dass** die gesteuerte radikalische Polymerisierung durch Zusammenbringen der Monomere, einer Quelle freier Radikale und eines Kontrollmittels erfolgt.

12. Verfahren gemäß Anspruch 11, **dadurch gekennzeichnet, dass** das Kontrollmittel ein Mittel ist, das eine Kontrollgruppe mit der Formel -S-CS- umfasst.

13. Verfahren gemäß Anspruch 12, **dadurch gekennzeichnet, dass** das Kontrollmittel ein Xanthat ist, das eine Gruppe der Formel -S-CS-O- umfasst.

14. Verfahren gemäß einem der Ansprüche 10 bis 13, **dadurch gekennzeichnet, dass** der Polymerisierungsschritt in wässriger, alkoholischer oder hydroalkoholischer Umgebung durchgeführt wird.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004014535 A
- WO 2006067325 A
- WO 2005116097 A
- WO 2000002939 A
- WO 2001077198 A
- WO 0056792 A
- WO 9958588 A
- WO 9831739 A
- WO 2004048428 A
- WO 2004048429 A
- WO 9858974 A

- WO 0075207 A
- WO 0142312 A
- WO 9801478 A
- WO 9931144 A
- WO 0226836 A
- WO 0210223 A
- WO 9903894 A
- WO 9630421 A
- WO 0039169 A
- WO 0037507 A

**Littérature non-brevet citée dans la description**

- **OTU et al.** *Makromol. Chem. Rapid. Commun.,* 1982, vol. 3, 127
- **MATYJASZEWSKI et al.** *Macromolecules,* 1995, vol. 28, 2093

- **D. BRAUN et al.** *Macromol. Symp.,* 1996, vol. 111, 63
- **WAYLAND et al.** *J.Am.Chem.Soc.,* 1994, vol. 116, 7973